# EUROPEAN PATENT APPLICATION

(11) **EP 4 603 280 A1**
(43) Date of publication of application: **20.08.2025**
(21) Application number: 23892010.2
(22) Date of filing: 15.11.2023
(51) Int. Cl.: B32B 27/08, B32B 7/022, B32B 27/32, H01M 10/0587, H01M 50/179, H01M 50/534, B32B 15/085, B32B 7/12, H01M 50/186

(54) **GAS-PERMEABLE FILM, POUCH EXTERIOR MATERIAL CONTAINING SAME, AND SECONDARY BATTERY**

(30) Priority: 15.11.2022 KR 20220152797; 14.11.2023 KR 20230157681
(71) Applicant: LG Energy Solution, Ltd., Seoul 07335 (KR)
(72) Inventor: KIM, Sang Hun, Daejeon 34122 (KR); LIM, Hun Hee, Daejeon 34122 (KR); YU, Hyung Kyun, Daejeon 34122 (KR); HWANG, Soo Ji, Daejeon 34122 (KR); KANG, Min Hyeong, Daejeon 34122 (KR); SONG, Dae Woong, Daejeon 34122 (KR)
(74) Representative: Plasseraud IP
(86) International application number: PCT/KR2023/018368
(87) International publication number: WO 2024/106944

(57) **Abstract**

A gas-permeable film of the present disclosure includes a first polymer layer, a second polymer layer, and a third polymer layer interposed between the first polymer layer and the second polymer layer, wherein the third polymer layer includes polypropylene and polytetrafluoroethylene at a weight ratio of 9:1 to 1:9. The gas-permeable film has excellent gas permeability, and thus, when applied to a secondary battery, the gas-permeable film may effectively discharge a gas generated inside the secondary battery.

## Description

### TECHNICAL FIELD

### Cross-reference to Related Applications

This application claims the benefit of Korean Patent Application Nos. 10-2022-0152797, filed on November 15, 2022, and 10-2023-0157681, filed on November 14, 2023, in the Korean Intellectual Property Office, the disclosures of which are incorporated herein in their entirety by reference.

### Technical Field

The present disclosure relates to a gas-permeable film, and more specifically, to a secondary battery in which the gas-permeable film is applied to a pouch exterior material or a lead tab film in order to improve gas permeability of the secondary battery.

### BACKGROUND ART

A secondary battery is widely used as a power source for mobile devices such as mobile phones, laptops, and camcorders. Particularly, the use of a lithium secondary battery is rapidly increasing since the lithium secondary battery has advantages of having a high operating voltage and a high energy density per unit weight.

The lithium secondary battery mainly uses a lithium-based oxide as a positive electrode active material and a carbon material as a negative electrode active material, and in general, may be classified into a lithium-ion battery, a lithium-ion polymer battery, or a lithium polymer battery depending on the form of an electrolyte used, or may also be classified into a cylindrical, prismatic, or pouch-type secondary battery depending on the appearance of the battery. Representatively, in terms of the shape of a battery, there is a high demand for a prismatic secondary battery and a pouch-type secondary battery which are thin, and thus are applicable to products such as mobile phones.

Among them, the pouch-type secondary battery which has no restriction in the shape or size, which is easy to assemble through thermal fusion, and is easy to discharge a gas or liquid when abnormal behavior occurs, and thus, is particularly suitable for manufacturing a lightweight thin cell, has become the center of the attention.

Meanwhile, a secondary battery is charged and discharged by the repetition of intercalation and deintercalation of lithium ions from a lithium metal oxide of a positive electrode to a graphite electrode of a negative electrode, and there are various problems that threaten safety of the secondary battery, such as internal short circuit due to external shock, heat generation due to overcharge, overdischarge, or the like, which results in electrolyte decomposition, a thermal runaway phenomenon, and the like.

Particularly, as energy density of a secondary battery increases, an electrolyte and an electrode active material react electrochemically due to repeated charging and discharging, and as a result, the amount of a gas generated is increasing. Such gas generation is significantly reducing the lifespan of the secondary battery, and the problem is expected to intensify in the future.

Meanwhile, if moisture penetrates into a secondary battery, the moisture may react with an electrolyte of the secondary battery, which may cause performance degradation of the secondary battery and gas generation. Therefore, it is necessary to control moisture that penetrates into the secondary battery.

However, there is insufficient research on extracting a gas generated inside a secondary battery to the outside and simultaneously, minimizing moisture penetrating into the secondary battery from the outside.

### DISCLOSURE OF THE DISCLOSURE

### TECHNICAL PROBLEM

In order to solve the above-described problem, an object of the present disclosure is to provide a film with an improved function of discharging gases.

Another object of the present disclosure is to apply the gas-permeable film as a lead film of a secondary battery, thereby providing a secondary battery with an improved function of discharging internal gases.

Yet another object of the present disclosure is to apply the film to a pouch exterior material for a secondary battery, thereby providing the pouch exterior material with good durability based on excellent adhesion, an excellent effect in preventing external moisture penetration, and an improved function of discharging internal gases.

### TECHNICAL SOLUTION

In order to achieve the above-described objects, a gas-permeable film according to the present disclosure includes a first polymer layer, a second polymer layer, and a third polymer layer interposed between the first polymer layer and the second polymer layer, wherein the third polymer layer includes polypropylene and polytetrafluoroethylene at a weight ratio of 9:1 to 1:9.

In one embodiment, the first polymer layer and the second polymer layer may each independently include a polyolefin-based polymer.

In one embodiment, the second polymer layer may include a modified polyolefin-based resin.

In one embodiment, the third polymer layer may include polypropylene and polytetrafluoroethylene at a weight ratio of 8:2 to 2:8.

In one embodiment, the thickness of the first polymer layer may be 40 to 200 µm.

In one embodiment, the thickness of the second polymer layer may be 40 to 200 µm.

In one embodiment, the thickness of the third polymer layer may be 40 to 600 µm.

In one embodiment, a secondary battery according to the present disclosure includes an electrode assembly, a pouch exterior material for accommodating the electrode assembly, an electrode lead electrically connected to the electrode assembly, and a gas-permeable film adhered to at least one surface of the electrode lead, wherein the film is the above-described gas-permeable film.

In one embodiment, the second polymer layer of the gas-permeable film of the secondary battery according to the present disclosure may include a poly (propylene-co-acrylic acid) .

In one embodiment, a pouch exterior material according to the present disclosure is a pouch exterior material for accommodating an electrode assembly, wherein the pouch exterior material has a structure in which a metal layer and a polymer layer are stacked, wherein the pouch exterior material has one or more holes, and the one or more holes are sealed with the above-described gas-permeable film.

In one embodiment, the pouch exterior material may have an outer layer portion and an inner layer portion, which are the polymer layer, wherein a deep layer portion interposed between the outer layer portion and the inner layer portion may be the metal layer.

In one embodiment, the outer layer portion may include one or more selected from the group consisting of polyethyleneterephthalate, polybutyleneterephthalate, polyethylenenaphthalate, polybutylenenaphthalate, copolymerized polyester, polycarbonate, and nylon.

In one embodiment, the deep layer portion may include one or more selected from the group consisting of aluminum, copper, nickel, iron, carbon, chromium, manganese, and an alloy including two or more thereof.

In one embodiment, the inner layer portion of the pouch exterior material may include one or more selected from the group consisting of polypropylene, acid-modified polypropylene, random polypropylene, and an ethylene propylene copolymer.

In one embodiment, the electrode assembly accommodated in the pouch exterior material may have an electrode lead electrically connected to the electrode assembly, wherein the electrode lead may be drawn to the outside of the pouch exterior material, a gas collection portion may be formed between a region in which the electrode lead is drawn to the outside of the pouch exterior material and the electrode assembly, and the hole may be formed in a pouch exterior material region corresponding to the gas collection portion.

### ADVANTAGEOUS EFFECTS

A gas-permeable film according to the present disclosure has excellent physical properties as a gas-permeable material, and has excellent durability due to excellent adhesion between films constituting the gas-permeable film. In addition, when the gas-permeable film according to the present disclosure is applied to a hole formed in a pouch exterior material for a secondary battery, the gas-permeable film has excellent adhesion to the pouch exterior material and thus, may effectively prevent penetration of external moisture, or when applied to a lead film for a secondary battery, the gas-permeable film may facilitate the discharge of a gas generated inside a secondary battery to the outside.

### BRIEF DESCRIPTION OF THE DRAWINGS

The following drawing attached herein illustrates a preferred embodiment of the present disclosure by example, and serves to enable technical concepts of the present disclosure to be further understood together with detailed description of the disclosure given below, and therefore the present disclosure should not be interpreted only with matters in such a drawing.
FIG. 1 is a cross-sectional view of a gas-permeable film according to an embodiment of the present disclosure.
FIG. 2 is a perspective view of an electrode assembly according to an embodiment of the present disclosure.
FIG. 3 is a cross-sectional view of an electrode assembly and a pouch exterior material according to an embodiment of the present disclosure.
FIG. 4 is an enlarged cross-sectional view of an electrode lead portion of a pouch exterior material according to an embodiment of the present disclosure.
FIG. 5 is an enlarged cross-sectional view of an electrode lead portion of a pouch exterior material according to an embodiment of the present disclosure, which shows a case in which a gas discharge path is open toward an upper pouch side.
FIG. 6 is an enlarged cross-sectional view of an electrode lead portion of a pouch exterior material according to an embodiment of the present disclosure, which shows a different example of a case in which a gas discharge path is open toward upper and lower pouch sides.
FIG. 7 is a cross-sectional view of a pouch exterior material according to an embodiment of the present disclosure, which shows a case in which a hole is formed.
FIG. 8 is an enlarged cross-sectional view of a portion in which a hole of a pouch exterior material according to an embodiment of the present disclosure is formed.

### MDOE FOR CARRYING OUT THE DISCLOSURE

Hereinafter, the present disclosure will be described in detail with reference to the drawings. It will be understood that words or terms used in the specification and claims shall not be interpreted as the meaning defined in commonly used dictionaries, and it will be further understood that the words or terms should be interpreted as having a meaning that is consistent with their meaning in the context of the relevant art and the technical idea of the disclosure, based on the principle that an inventor may properly define the meaning of the words or terms to best explain the disclosure.

Therefore, an embodiment described herein and configurations described in the drawings are merely the most preferred embodiment of the present disclosure, and are not intended to limit the technical idea of the present disclosure. Therefore, it should be understood that there may be various equivalents and modifications that may substitute the embodiments at the time of filing the present application.

The terms used herein are for the purpose of describing embodiments and are not intended to be limiting of the present disclosure. In the present disclosure, singular forms include plural forms unless the context clearly indicates otherwise. As used herein, the terms "comprises" and/or "comprising" are intended to be inclusive of the stated elements, and do not exclude the possibility of the presence or the addition of one or more other elements.

In the present specification, when a part is said to include a certain component, it means that the part may further include another component rather than excluding another component unless otherwise stated.

In the present specification, the description of "A and/or B" means A, or B, or A and B.

In the present specification, "%" means wt% unless otherwise noted.

According to one aspect of the present disclosure, there is provided a gas-permeable film including a first polymer layer, a second polymer layer, and a third polymer layer interposed between the first polymer layer and the second polymer layer.

Here, the third polymer layer include polypropylene (PP) and polytetrafluoroethylene (PTFE), and the weight ratio of the two polymeric materials may be 9:1 to 1:9, preferably 8:2 or less, 7:3 or less, or 6:4 or less, or may be 2:8 or greater or 3:7 or greater.By including polytetrafluoroethylene in the above-described range, the film according to the present disclosure may effectively discharge a gas while blocking moisture, and may improve adhesion between the films. If the amount of either polypropylene or polytetrafluoroethylene is extremely small or large, or if only one thereof is present, for example, if there is an extremely large amount of polypropylene, there may be a problem in that gas permeation performance is very poor, so that swelling may not be prevented, and if there is an extremely large amount of polytetrafluoroethylene, there may be a risk in that the adhesion between the films is not maintained, so that durability may become significantly poor.Accordingly, it may be preferable that polypropylene and polytetrafluoroethylene are mixed in the above-described range.

If the third polymer layer is exposed to the outside, for example, if the third polymer layer becomes a surface that adheres to the electrode lead, or a surface that fuses with the pouch, the content of polytetrafluoroethylene affects adhesive performance, and thus, cannot be sufficiently increased. However, in the present disclosure, the third polymer layer is positioned between the first polymer layer and the second polymer layer, and thus, is not exposed to the outside, so that it is possible to include polytetrafluoroethylene in a relatively excessive amount, and in this case, the gas discharge performance may be more excellent.

Polypropylene is a material with good moldability, and excellent dimensional stability. In addition, polypropylene is lightweight, and has good chemical resistance, excellent flex fatigue resistance, and excellent heat resistance, and thus, is used in various housings, exterior materials, films, and the like. However, since polypropylene has moisture permeability, when only the polypropylene is used as a polymer layer, the moisture barrier effect is insufficient. Meanwhile, polytetrafluoroethylene is a material with good moisture barrier properties and particularly good gas permeability, but is a material with low adhesion.

In the present disclosure, a mixture of polypropylene and polytetrafluoroethylene is included as a third polymer layer, so that it is possible to exert both the excellent mechanical properties and adhesion of polypropylene and the moisture barrier effect of polytetrafluoroethylene, and to further improve the gas permeability of the gas-permeable film according to the present disclosure.

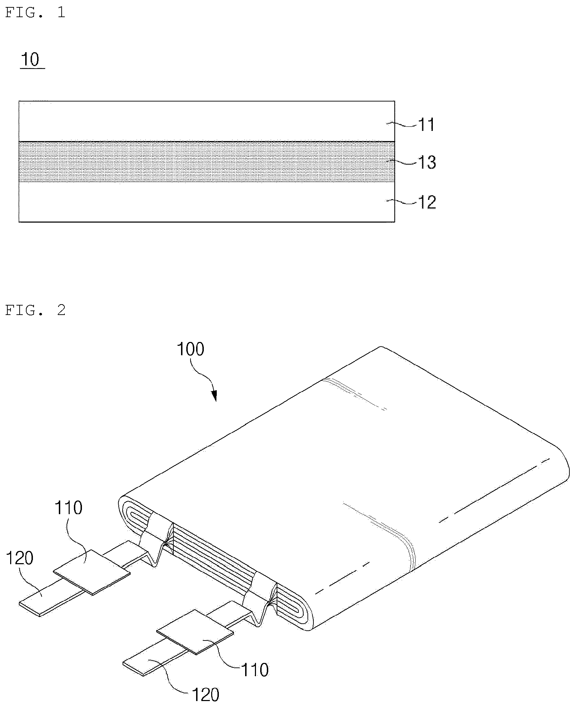

FIG. 1 is a cross-sectional view of a gas-permeable film 10 according to an embodiment of the present disclosure. A third polymer layer 13 is positioned between a first polymer layer 11 and a second polymer layer 12.

In one embodiment of the present disclosure, the first polymer layer and the second polymer layer may each independently include a polyolefin-based polymer, and the first polymer layer may include one or more selected from the group consisting of polypropylene (PP), polyethyleneterephthalate (PET), polyethylenenaphtalate (PEN), polybutylene terephthalate (PBT), polybutylenenaphthalate (PBN), and polyimide (PI).

Specifically, the polypropylene resin may include a propylene polymer (homo polypropylene), a propylene copolymer (PP co-polymer), a propylene ter-polymer (PP ter-polymer), and the like. In addition, the propylene co-polymer (PP co-polymer) may include a propylene-ethylene block copolymer, and the like, and the propylene ter-polymer (PP ter-polymer) may include a propylene-ethylene-butylene block co-polymer.

If the first polymer layer includes polypropylene, since polypropylene is a hydrophobic material, it is possible to improve the water resistance of a manufactured film according to the present disclosure. In addition, since polypropylene has a high melting point, the film according to the present disclosure has excellent heat resistance and may have an improved sealing effect. In addition, it is possible to improve the physical properties such as adhesion and mechanical strength of the film according to the present disclosure.

In addition, in one embodiment of the present disclosure, the second polymer layer may include one or more selected from the group consisting of a poly (propylene-co-acrylic acid), polyphthalamide (PPA), polypropylene (PP), polyethyleneterephthalate (PET), polyethylenenaphtalate (PEN), polybutyleneterephtalate (PBT), polybutylenenaphtalate (PBN), and polyimide (PI).

If the second polymer layer includes polypropylene, since polypropylene is a hydrophobic material, it is possible to improve the water resistance of a manufactured film according to the present disclosure. In addition, since polypropylene has a high melting point, the film according to the present disclosure has excellent heat resistance and may have an improved sealing effect. In addition, it is possible to improve the physical properties such as adhesion and mechanical strength of the film according to the present disclosure. Particularly, if the second polymer layer includes a poly(propylene-co-acrylic acid), it is possible to improve the adhesion of the film according to the present disclosure. For example, if the second polymer layer is a poly(propylene-co-acrylic acid), the adhesion to an electrode lead becomes excellent.

In one embodiment according to the present disclosure, the thickness of the first polymer layer is 40 to 200 µm, 40 to 80 µm or 80 to 200 µm. The film according to the present disclosure is lightweight and has excellent mechanical properties and heat resistance by having the first polymer layer with a thickness corresponding to the above-described range.

In one embodiment according to the present disclosure, the thickness of the second polymer layer is 40 to 200 µm, 40 to 80 µm or 80 to 200 µm. The film according to the present disclosure is lightweight and has excellent mechanical properties and heat resistance by having the first polymer layer with a thickness corresponding to the above-described range.

In one embodiment according to the present disclosure, the thickness of the third polymer layer is 40 to 600 µm, 40 to 120 µm or 120 to 600 µm. The film according to the present disclosure has sufficient gas permeability by having the first polymer layer with a thickness corresponding to the above-described range.

According to one aspect of the present disclosure, there is provided a secondary battery including an electrode assembly, a pouch exterior material for accommodating the electrode assembly, an electrode lead electrically connected to the electrode assembly, and the above-described gas-permeable film according to the present disclosure adhered to at least one surface of the electrode lead.

In general, a secondary battery has an electrode assembly composed of a positive electrode, a negative electrode, and a separator positioned therebetween, and has an electrolyte which delivers lithium ions through the separator, a pouch which accommodates the same, and an electrode lead which serves as a path that allows a current to flow out of the pouch.

The electrode lead is used as a positive electrode terminal or a negative electrode terminal by being electrically connected to the positive electrode of the electrode assembly (or a positive electrode uncoated portion or a positive electrode tab drawn from the positive electrode) and/or the negative electrode (or a negative electrode uncoated portion or a negative electrode tab drawn from the negative electrode) .

Here, a lead film is attached to the electrode lead to prevent short circuits in the electrode lead, and serves to seal the electrode lead and the exterior material. When the gas-permeable film according to the present disclosure is applied as a lead film, it is possible to effectively discharge a gas generated inside the pouch while maintaining the sealability. The gas may be discharged through the first polymer layer, the second polymer layer, and the third polymer layer, which are the above-described gas-permeable film, and if the gas-permeable film according to the present disclosure is applied to the electrode lead, the amount of a gas moving through the third polymer layer may be the largest when the gas is discharged in a horizontal direction.

The lead film may be formed on a top surface and a bottom surface of the electrode lead, and may be formed to wrap the two surfaces including the top surface and the bottom surface, so as to wrap side surfaces of the electrode lead.

In addition, the other side of the lead film which faces the electrode lead may face the exterior material. Furthermore, the lead film may be adhered to the pouch exterior material through an adhesive, and may be thermally fused to the pouch exterior material through thermal fusion.

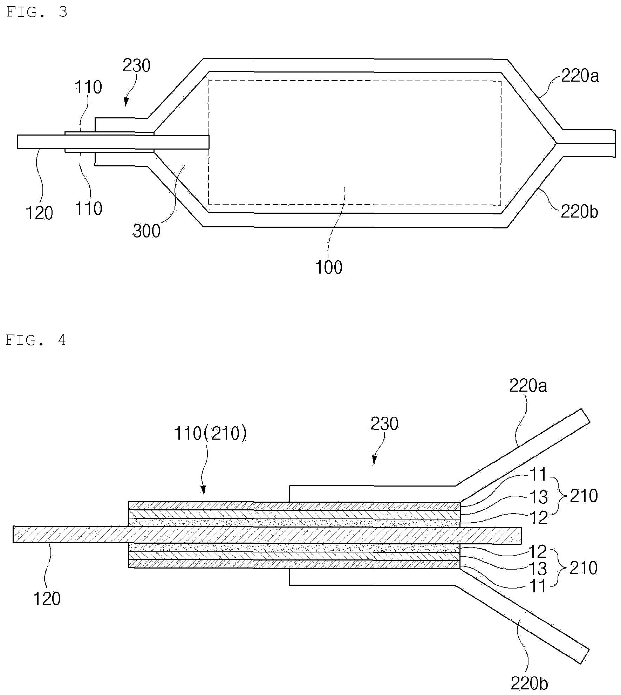

FIG. 2 shows that the gas-permeable film according to the present disclosure is adhered, as a lead film 110, to an electrode lead 120 electrically connected to an electrode assembly 100 according to one embodiment of the present disclosure. In addition, FIG. 3 is a cross-sectional view showing a secondary battery according to an embodiment of the present disclosure, wherein a pouch exterior material includes an upper pouch 220a and a lower pouch 220b, and the electrode assembly 100 and an electrolyte (not shown) are accommodated in an inner space 300 formed of the upper pouch 220a and the lower pouch 220b. In addition, the upper pouch 220a and the lower pouch 220b have a sealing portion formed on a terrace portion 230 of an outer circumferential surface to seal the inner space, and the sealing portions are adhered (sealed) to each other by a method such as thermal fusion.

The pouch exterior material protects internal components such as the electrode assembly 100 and the electrolyte, and is configured in a form in which a metal layer such as an aluminum thin film is included in order to supplement the electrochemical properties by the electrode assembly 100 and the electrolyte and to increase heat dissipation. In addition, in order to secure insulation properties, the metal layer is interspersed between polymer layers formed of insulating materials. However, a gas may be generated inside due to a reaction between the electrode assembly 100 and the electrolyte, and a metal layer and a polymer layer typically used as pouch exterior materials do not have good gas permeability, so that there are cases in which the pouch exterior material expands or explodes. Therefore, it is necessary to efficiently discharge the gas generated inside the pouch exterior material to the outside.

Accordingly, by applying the gas-permeable film as described above to a lead film on the electrode lead, when an internal pressure increases due to a gas generated inside, the gas is discharged through the lead film, which is a gas-permeable film, in a horizontal direction based on the film, or as the interface between the electrode lead and the lead film is partially open, a gas discharge path is formed, and the gas may be transmitted and discharged through the gas-permeable film (lead film) in a vertical direction based on the film.

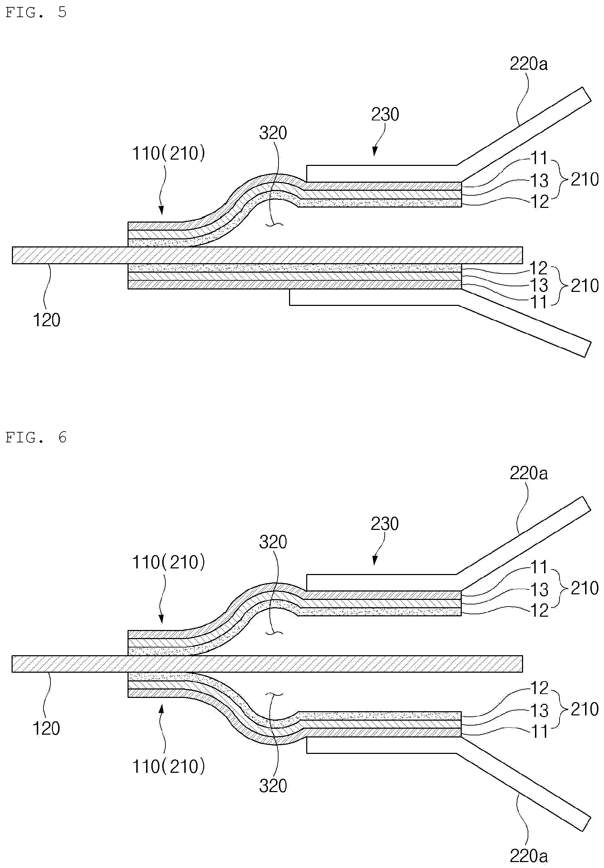

Although not specifically illustrated in the drawings, as shown in FIG. 5 or FIG. 6, an additional film may be included such that the interface between the electrode lead and the lead film is partially open. The additional film may be a path-forming film, and the path-forming film may be disposed between the electrode lead and the lead film in a remaining region except for an outermost portion in an electrode lead protrusion direction in a region in which the lead film and the electrode lead are adhered. The above-described path-forming film may serve to weaken adhesion between the electrode lead and the lead film such that the lead film portion may be open if the internal pressure of the pouch increases. At this time, the outermost portion in the electrode lead protrusion direction in the region in which the lead film and the electrode lead are adhered may be about 10% to 60% of the adhered region.

Specifically, referring to FIG. 4, a gas-permeable film 210 may be disposed as the lead film 110 on the electrode lead 120 on the side of the upper pouch 220a and the lower pouch 220b.

If the pressure inside the battery increases due to the gas generated inside, as shown in FIG. 5, a portion of the interface between the electrode lead 120 and the lead film 110, that is, the interface between the first polymer layer 11 of the gas-permeable film 210 and the electrode lead 120 may be open to form a gas discharge path 320, and as shown in FIG. 6, the gas-permeable film 210 on both the upper and lower pouch sides may be open to form the gas discharge path 320, wherein the gas transmits the gas-permeable film 210 through the gas discharge path 320 and is discharged to the outside, so that the internal pressure of the battery may decrease.

According to one embodiment of the present disclosure, in the gas-permeable film according to the present disclosure adhered to the electrode lead, the second polymer layer includes a poly(propylene-co-acrylic acid). Since the electrode lead is a metal material, adhesion to the metal may be improved by including a poly(propylene-co-acrylic acid) as the second polymer layer of the film according to the present disclosure. Therefore, when the gas-permeable film is adhered to the electrode lead, it is preferable to adhere the same such that the second polymer layer faces the electrode lead.

The poly(propylene-co-acrylic acid) of the second polymer layer may be prepared by treating a polypropylene layer with maleic anhydride.

According to one embodiment of the present disclosure, in the gas-permeable film according to the present disclosure to be adhered to the electrode lead, it is preferable that the thickness of the first polymer layer is 80 to 200 µm, 80 to 180 pm, 80 to 160 µm, 100 to 200 µm, 120 to 200 µm, 100 to 180 µm, or 120 to 160 µm. If the gas-permeable film according to the present disclosure is applied as a lead film to be adhered to the electrode lead, a gas generated inside the pouch transmits the film in a horizontal direction and is discharged to the outside. Therefore, if the thickness of a film applied as a lead film corresponds to the above-described range, it is possible to achieve appropriate gas permeability in a horizontal direction, and to maintain electrolyte sealability, and the like.

According to one embodiment of the present disclosure, in the gas-permeable film according to the present disclosure to be adhered to the electrode lead, it is preferable that the thickness of the second polymer layer is 80 to 200 µm, 80 to 180 µm, 80 to 160 µm, 100 to 200 µm, 120 to 200 µm, 100 to 180 µm, or 120 to 160 µm. If the gas-permeable film according to the present disclosure is applied as a lead film to be adhered to the electrode lead, a gas generated inside the pouch transmits the film in a horizontal direction and is discharged to the outside. Therefore, if the thickness of a gas-permeable film applied as a lead film corresponds to the above-described range, it is possible to achieve appropriate gas permeability in a horizontal direction, and to maintain electrolyte sealability, and the like.

According to one embodiment of the present disclosure, in the gas-permeable film according to the present disclosure to be adhered to the electrode lead, it is preferable that the thickness of the third polymer layer is 120 to 600 µm, 150 to 600 µm, 200 to 600 µm, 250 to 600 µm, 120 to 550 µm, 120 to 500 µm, 120 to 450 µm, 150 to 550 µm, 200 to 500 µm, 250 to 450 µm, or 300 to 400 µm. If the gas-permeable film according to the present disclosure is applied as a lead film to be adhered to the electrode lead, a gas generated inside the pouch transmits the gas-permeable film in a horizontal direction and is discharged to the outside. Therefore, if the thickness of a gas-permeable film applied as a lead film corresponds to the above-described range, it is possible to achieve appropriate gas permeability in a horizontal direction, and to maintain electrolyte sealability, and the like.

According to one embodiment of the present disclosure, a metal conductor used as the electrode lead may be selected from the group consisting of, but is not limited to, copper (Cu), aluminum (Al), nickel (Ni), iron (Fe), carbon (C), chromium (Cr), manganese (Mn), and an alloy including two or more thereof, and may be used without special limitation as long as it is a material which may be electrically connected to an electrode tap. The metal conductor may contain aluminum, and the aluminum may be optionally an alloy including an element selected from the group consisting of silicon, boron, germanium, arsenic, antimony, copper, magnesium, manganese, zinc, lithium, iron, chromium, vanadium, titanium, bismuth, potassium, tin, lead zirconium, nickel, cobalt, and a combination thereof.

The metal conductor may be selected in consideration of mechanical strength and flexibility. In addition, it is preferable that aluminum is used for a positive electrode, and copper, nickel, or nickel-plated metal is used for a negative electrode, but the embodiment is not limited thereto. In addition, the metal conductors may have a thickness of 0.1 mm to 1.0 mm and a width of 1 mm to 200 mm, but is not limited thereto, and may have standards predetermined depending on the use of a secondary battery to be manufactured.

According to one aspect of the present disclosure, in a pouch exterior material for accommodating an electrode assembly, the pouch exterior material has a structure in which a metal layer and a polymer layer are stacked, wherein the pouch exterior material has one or more holes, and the one or more holes are sealed with the above-described gas-permeable film.

Since a portion in which the metal layer and the polymer layer of the pouch exterior material are stacked has low gas permeability, it is difficult to discharge a gas generated inside a pouch through the portion in which the metal layer and the polymer layer are stacked. Therefore, after the metal layer and the polymer layer are stacked, one or more holes are formed vertically passing through the same position of each layer, and then the one or more holes are sealed with the above-described gas-permeable film according to the present disclosure to prevent an electrolyte from escaping, and while the role of the pouch exterior material that protects an internal electrode assembly is maintained, a gas may be smoothly discharged through the gas-permeable film portion according to the present disclosure. Specifically, the first polymer layer, the second polymer layer and the third polymer layer, which are the gas-permeable film according to the present disclosure, have excellent gas permeability, so that the gas generated inside the pouch exterior material may pass through the gas permeable-film according to the present disclosure in a vertical direction and be discharged to the outside.

The position of the holes formed in the pouch exterior material is not limited, but the holes may be formed, for example, at a portion that is not in direct contact with the electrode assembly stored in the pouch exterior material.

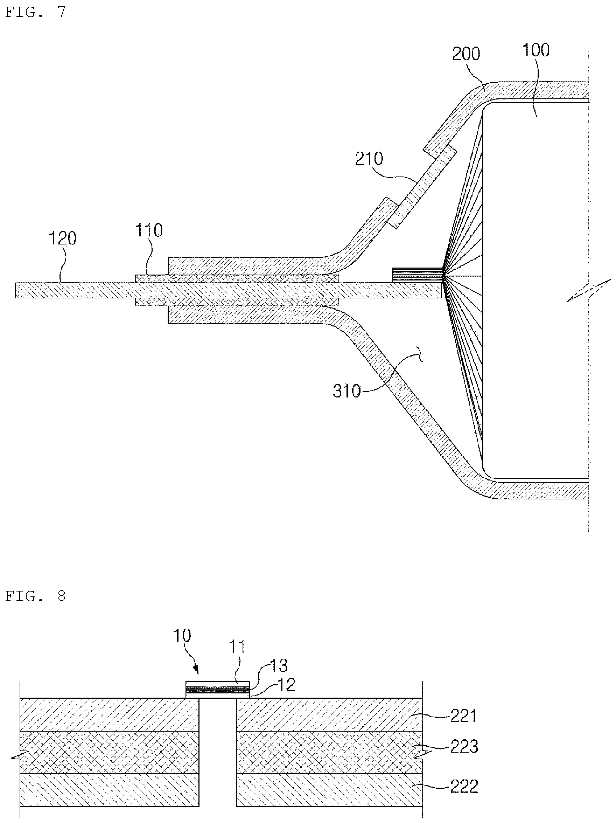

FIG. 7 is a cross-sectional view of an electrode assembly and a pouch exterior material according to one embodiment of the present disclosure. If the electrode lead 120 electrically connected to the electrode assembly 100 is drawn to the outside of a pouch exterior material 200, a gas collection portion 310 may be formed between a region in which the electrode lead 120 is drawn to the outside of the pouch exterior material 200 and the electrode assembly 100. Here, one or more holes may be formed in a region of the pouch exterior material corresponding to the gas collection portion 310, and the formed holes may be sealed with the gas-permeable film 210 according to the present disclosure. At this time, the region of the pouch exterior material corresponding to the gas collection portion 310 may not be in direct contact with the electrode assembly. Therefore, if the gas-permeable film 210 according to the present disclosure is positioned in the region of the pouch exterior material corresponding to the gas collection portion 310, the gas-permeable film 210 may not be in direct contact with the electrode assembly 100.

Here, sealing may be performed by thermal fusion, but is not necessarily limited thereto, and may be performed by various methods to be commonly used for sealing. As the lead film 110, the gas-permeable film according to the present disclosure may be used, but a typically widely used lead film may also be used.

In one embodiment of the present disclosure, when the gas-permeable film according to the present disclosure is applied to a pouch exterior material, a lead film attached to an electrode lead electrically connected to an electrode assembly accommodated in the pouch exterior material may be the gas-permeable film according to the present disclosure, but a lead film generally used in the technical field of secondary batteries may be used. For example, the lead film 110 may contain polyethylene, polypropylene, polyethyleneterephthalate, polyethylenenaphthalate, polybutyleneterephthalate, polybutylenenaphthalate, polyimide, or two or more thereof.

In one embodiment of the present disclosure, the gas-permeable film may be positioned in the direction of an inner layer portion of the pouch exterior material. Specifically, after forming one or more holes in the pouch exterior material, the gas-permeable film may be placed on the inner layer portion of the pouch exterior material to seal the holes.

In one embodiment of the present disclosure, the gas-permeable film may be positioned in the direction of an outer layer portion of the pouch exterior material. Specifically, after forming one or more holes in the pouch exterior material, the gas-permeable film may be placed on the outer layer portion of the pouch exterior material to seal the holes. Here, sealing may be performed by thermal fusion, but is not necessarily limited thereto, and may be performed by various methods to be commonly used for sealing.

In one embodiment of the present disclosure, the size (diameter) of the hole formed in the pouch exterior material may be 0.5 mm to 20 mm, 1 mm to 10 mm, or 3 mm to 7 mm. If the size of the hole satisfies the above-described range, when the gas-permeable film according to the present disclosure seals the hole, a gas generated inside a pouch may be sufficiently discharged.

In one embodiment of the present disclosure, the hole formed in the pouch exterior material may be formed in the shape of a circle, triangle, quadrangle, or polygon. However, the shape of the hole is not limited thereto, and the hole may be formed in a free shape which may be selected by a person skilled in the art.

FIG. 8 shows a cross-section of a pouch exterior material according to an embodiment. The pouch exterior material is one in which a metal layer and a polymer layer are stacked, and a deep layer portion 223 is the metal layer, and an inner layer portion 221 and an outer layer portion 222 are the polymer layers. Here, a hole is formed at the same position of each layer of the metal layer and the polymer layer which are stacked, and the hole is sealed with the gas-permeable film 210 according to the present disclosure. A pouch exterior material composed of only a typical metal layer and a typical polymer layer without the gas-permeable film 210 according to the present disclosure may have low gas permeability. However, the pouch exterior material according to the present disclosure includes the gas-permeable film 210 with excellent gas permeability, so that the pouch exterior material may discharge a gas smoothly.

According to one embodiment of the present disclosure, in the gas-permeable film according to the present disclosure which seals the one or more holes, it is preferable that the thickness of the first polymer layer is 40 to 80 µm, 40 to 70 µm, 40 to 60 µm, 50 to 80 µm, 60 to 80 µm, 55 to 75 µm, or 50 to 70 µm. When the gas-permeable film according to the present disclosure is applied to a pouch exterior material, a gas generated inside a pouch transmits the film in a vertical direction and is discharged to the outside. Therefore, if the thickness of the film applied to the pouch exterior material corresponds to the above-described range, it is possible to achieve appropriate gas permeability in a vertical direction, and to maintain mechanical strength and electrolyte sealability, and the like.

According to one embodiment of the present disclosure, in the gas-permeable film according to the present disclosure which seals the one or more holes, it is preferable that the thickness of the second polymer layer is 40 to 80 µm, 40 to 70 µm, 40 to 60 µm, 50 to 80 µm, 60 to 80 µm, 55 to 75 µm, or 50 to 70 µm. When the gas-permeable film according to the present disclosure is applied to a pouch exterior material, a gas generated inside a pouch transmits the film in a vertical direction and is discharged to the outside. Therefore, if the thickness of the film applied to the pouch exterior material corresponds to the above-described range, it is possible to achieve appropriate gas permeability in a vertical direction, and to maintain mechanical strength and electrolyte sealability, and the like.

According to one embodiment of the present disclosure, in the gas-permeable film according to the present disclosure which seals the one or more holes, it is preferable that the thickness of the third polymer layer is 40 to 120 µm, 40 to 100 µm, 40 to 80 µm, 60 to 120 µm, 80 to 120 µm, 50 to 110 µm, or 60 to 100 µm. When the film according to the present disclosure is applied to a pouch exterior material, a gas generated inside a pouch transmits the film in a vertical direction and is discharged to the outside. Therefore, if the thickness of the film applied to the pouch exterior material corresponds to the above-described range, it is possible to achieve appropriate gas permeability in a vertical direction, and to maintain mechanical strength and electrolyte sealability, and the like.

According to one embodiment of the present disclosure, the stacked metal layer and the polymer layer of the pouch exterior material are characterized in that an outer layer portion and an inner layer portion are the polymer layers, and the metal layer is positioned in a deep layer portion interposed between the outer layer portion and the inner layer portion. That is, in the pouch exterior material, the outer layer portion and the inner layer portion may be the polymer layers, and the deep layer portion interposed between the outer layer portion and the inner layer portion may be the metal layer.

The outer layer portion may include one or more selected from the group consisting of polyethyleneterephthalate, polybutyleneterephthalate, polyethylenenaphthalate, polybutylenenaphthalate, copolymerized polyester, polycarbonate, and nylon, and may be configured as a single layer or a multilayer. However, the embodiment of the present disclosure is not limited thereto, and any material that is commonly used in the technical field for pouch exterior materials may be used.

The deep layer portion may include one or more selected from the group consisting of aluminum, copper, nickel, iron, carbon, chromium, manganese, and an alloy including two or more thereof, and may be configured as a single layer or a multilayer. However, the embodiment of the present disclosure is not limited thereto, and any material that is commonly used in the technical field for pouch exterior materials may be used.

The inner layer portion may include one or more selected from the group consisting of polypropylene, acid-modified polypropylene, random polypropylene, and an ethylene propylene copolymer, and may be configured as a single layer or a multilayer. However, the embodiment of the present disclosure is not limited thereto, and any material that is commonly used in the technical field for pouch exterior materials may be used.

Hereinafter, the present disclosure will be described in more detail with reference to example, but the following examples are merely illustrative of the present disclosure, and the scope of the present disclosure is not limited thereto.

### 1. Gas-permeable film applied as lead film

### Example 1-1

### (1) Manufacture of gas-permeable film

As a first polymer layer, polypropylene with a thickness of 40 µm, as a second polymer layer, a poly (propylene-co-acrylic acid) with a thickness of 100 µm, and as a third polymer layer, a mixture in which polypropylene with a thickness of 60 µm and polytetrafluoroethylene were mixed at a weight ratio of 3:7 were prepared.

Thereafter, the first polymer layer, the third polymer layer, and the second polymer layer were sequentially stacked and then thermally fused to manufacture a gas-permeable film.

### (2) Manufacture of pouch exterior material

On one surface of an aluminum alloy thin film having a width of 266 mm, a length of 50 m, and a thickness of 60 µm, a polyethyleneterephthalate (PET) film having a width of 266 mm, a length of 50 m, a thickness of 12 µm and a nylon film having a thickness of 12 µm and a nylon film having a width of 266 mm, a length of 50 m, and a thickness of 25 µm were stacked, and on the other surface thereof, a polypropylene film having a width of 266 mm, a length of 50 m, and a thickness of 80 µm was stacked to manufacture a pouch film laminate having a structure of polyethyleneterephthalate/nylon/aluminum alloy thin film/polypropylene film.

Here, the polyethyleneterephthalate film and the nylon film are a base layer, the aluminum alloy thin film is a gas barrier layer, and a polypropylene film is a sealant layer.

The pouch film laminate was molded to manufacture a pouch-type case including an accommodation portion and a sealing portion.

### (3) Manufacture of secondary battery

A negative electrode, a positive electrode, and a porous polyethylene separator were assembled in a stacking manner and then laminated to prepare an electrode assembly. Thereafter, an electrode lead was coupled to the electrode assembly.

LiPF₆ was dissolved to 1.0 M in a solvent (EC:EMC:DMC = 3:3:4 volume ratio) to prepare an electrolyte. With the front end of the electrode lead drawn to the outside, the electrode assembly was accommodated in the pouch-type case and the electrolyte was injected thereto.

The gas-permeable film manufactured above was stacked as a lead film on an upper surface of the electrode lead.

Thereafter, the sealing portion of the pouch-type case was sealed for 2 seconds under the conditions of a seal bar area of 200 mm × 10 mm, 220 °C, and 0.27 MPa, and then left to stand for 4 hours at 60 °C to manufacture a pouch-type secondary battery. At this time, a portion of the sealing portion in which the lead film is formed has a structure in which lower case/lead film/electrode lead/gas discharge portion/lead film/upper case are sequentially stacked.

### Example 1-2

A gas-permeable film was manufactured in the same manner as in Example 1-1, except that a mixture containing polypropylene and polytetrafluoroethylene at a weight ratio of 5:5 was used as the third polymer layer, and a pouch-type secondary battery was manufactured in the same manner.

### Example 1-3

A gas-permeable film was manufactured in the same manner as in Example 1-1, except that a mixture containing polypropylene and polytetrafluoroethylene at a weight ratio of 7:3 was used as the third polymer layer, and a pouch-type secondary battery was manufactured in the same manner.

### Example 1-4

A gas-permeable film was manufactured in the same manner as in Example 1-3, except that polypropylene was used instead of the poly(propylene-co-acrylic acid) as the second polymer layer.

### Comparative Example 1-1

As a first polymer layer, polypropylene with a thickness of 40 µm, as a second polymer layer, a poly (propylene-co-acrylic acid) with a thickness of 100 µm, and as a third polymer layer, polypropylene with a thickness of 60 µm were prepared. Thereafter, the first polymer layer, the third polymer layer, and the second polymer layer were stacked and then thermally fused to manufacture a gas-permeable film.

Thereafter, a pouch exterior material and a secondary battery were manufactured in the same manner as in Example 1-1.

### Comparative Example 1-2

A gas-permeable film, a pouch exterior material, and a secondary battery were manufactured in the same manner as in Example 1-1, except that a polytetrafluoroethylene film alone was applied as the third polymer layer.

### Comparative Example 1-3

A gas-permeable film, a pouch exterior material, and a secondary battery were manufactured in the same manner as in Example 1-1, except that the first polymer layer and the second polymer layer were not formed, and the thickness of the third polymer layer was formed to 200 µm.

### 2. Gas-permeable film disposed in pouch exterior material

### Example 2-1

### (1) Manufacture of gas-permeable film

A gas-permeable film was manufactured in the same manner as in Example 1-1, except that polypropylene was used instead of the poly(propylene-co-acrylic acid) as the second polymer layer.

### (2) Manufacture of pouch exterior material

On one surface of an aluminum alloy thin film having a width of 266 mm, a length of 50 m, and a thickness of 60 µm, a polyethyleneterephthalate (PET) film having a width of 266 mm, a length of 50 m, a thickness of 12 µm and a nylon film having a thickness of 12 µm and a nylon film having a width of 266 mm, a length of 50 m, and a thickness of 25 µm were stacked, and on the other surface thereof, a polypropylene film having a width of 266 mm, a length of 50 m, and a thickness of 80 µm was stacked to manufacture a pouch film laminate having a structure of polyethyleneterephthalate/nylon/aluminum alloy thin film/polypropylene film.

Here, the polyethyleneterephthalate film and the nylon film are a base layer, the aluminum alloy thin film is a gas barrier layer, and a polypropylene film is a sealant layer.

The pouch film laminate was molded to manufacture a pouch exterior material including an accommodation portion and a sealing portion.

Thereafter, one hole with a diameter of 5 mm was punched in an accommodation portion region adjacent to the sealing portion to form a through-hole, and the gas-permeable film previously manufactured was placed toward an inner layer portion on the punched hole, and thermally fused on the pouch film laminate through heat treatment, thereby sealing the hole formed on the pouch film laminate, to manufacture a pouch exterior material.

At this time, in the case in which an electrode assembly connected to an electrode lead is accommodated, the pouch exterior material is manufactured in a shape that allows a gas collection portion may be formed between a region in which the electrode lead is drawn to the pouch exterior material and the electrode assembly, and the hole is punched to be positioned in a region of the pouch exterior material corresponding to the gas collection portion.

### (3) Manufacture of secondary battery

A negative electrode, a positive electrode, and a porous polyethylene separator were assembled in a stacking manner and then laminated to prepare an electrode assembly. Thereafter, an electrode lead was coupled to the electrode assembly.

LiPF₆ was dissolved to 1.0 M in a solvent (EC:EMC:DMC = 3:3:4 volume ratio) to prepare an electrolyte. With the front end of the electrode lead drawn to the outside, the electrode assembly was accommodated in the pouch-type case and the electrolyte was injected thereto.

Thereafter, the sealing portion of the pouch-type case was sealed for 2 seconds under the conditions of a seal bar area of 200 mm × 10 mm, 220 °C, and 0.27 MPa, and then left to stand for 4 hours at 60 °C to manufacture a pouch-type secondary battery. At this time, a portion of the sealing portion in which the lead film is formed has a structure in which lower case/lead film/electrode lead/gas discharge portion/lead film/upper case are sequentially stacked.

### Example 2-2

A gas-permeable film was manufactured in the same manner as in Example 2-1, except that a mixture containing polypropylene and polytetrafluoroethylene at a weight ratio of 5:5 was used as the third polymer layer, and a pouch-type secondary battery was manufactured in the same manner.

### Example 2-3

A gas-permeable film was manufactured in the same manner as in Example 2-1, except that a mixture containing polypropylene and polytetrafluoroethylene at a weight ratio of 7:3 was used as the third polymer layer, and a pouch-type secondary battery was manufactured in the same manner.

### Comparative Example 2-1

As a first polymer layer, polypropylene with a thickness of 40 µm, as a second polymer layer, a poly (propylene-co-acrylic acid) with a thickness of 100 µm, and as a third polymer layer, polypropylene with a thickness of 60 µm were prepared. Thereafter, the first polymer layer, the third polymer layer, and the second polymer layer were stacked and then thermally fused to manufacture a gas-permeable film, and a pouch-type secondary battery was manufactured in the same manner.

### Comparative Example 2-2

A gas-permeable film and a pouch-type secondary battery were manufactured in the same manner as in Comparative Example 2-1, except that a polytetrafluoroethylene film alone was applied as the third polymer layer.

### Comparative Example 2-3

A gas-permeable film and a pouch-type secondary battery were manufactured in the same manner as in Comparative Example 2-1, except that the first polymer layer and the second polymer layer were not formed, and the thickness of the third polymer layer was formed to 200 µm.

### Experimental Example 1: Evaluation of adhesion of gas-permeable film

With respect to the pouch-type secondary battery manufactured in each of Examples and Comparative Examples, adhesion between the pouch film and the gas-permeable film and adhesion between stacked films within the gas-permeable film were evaluated, and with respect to set No. 1, adhesion with the electrode lead was additionally evaluated.

Specifically, a CO₂ gas was generated inside the pouch exterior material and then stored in a 60 °C chamber for 5 days. Thereafter, a portion spaced 10 mm apart from one edge of the sealing portion was bent to break the electrode lead, and both ends of a lead assembly were respectively coupled to a lower jig and an upper jig of an UTM, and then, an average value (kgf/15 mm) of a flat section was calculated in an adhesive strength graph measured when pulling 30 mm in a 180° direction at a rate of 50 mm/min. The results are shown in Tables 1 and 2 below.

### Experimental Example 2: Evaluation of gas discharge rate

Using pressure-resistant equipment manufactured by ITS, CO₂ was injected into the pouch-type secondary battery to increase the pressure inside the pouch until the pressure difference between the inside and outside the pouch was 1.0 to 2.5 bar, and then stored in a 60 °C chamber for about 1 to 2 days. A decrease in the pressure inside the pouch during the above-described storage period was confirmed to calculate a gas discharge rate based on a flow rate and a pressure decrease value, which are shown in Tables 1 and 2 below.

**[Table 1]**

| | Gas-permeable f ilm | | | Gas di sch arg e r ate (cc mm/ m²d ay) | Adhesion (kgf/15mm) | | | |
|---|---|---|---|---|---|---|---|---|
| | Fi rs t la ye r | Sec ond la yer | Third layer | | First laye r-thi rd la yer | Secon d lay er-th ird l ayer | Firs t la yerpouc h | Secon d lay er-el ectro de le ad |
| Example 1-1 | PP | PPa | PP+PTF E (3: 7) | 279 | 1.1 | 1.0 | 12.3 | 7.7 |
| Example 1-2 | PP | PPa | PP+PTF E (5: 5) | 160 | 0.8 | 0.9 | 12.7 | 7.3 |
| Example 1-3 | PP | PPa | PP+PTF E (7:3) | 124 | 0.9 | 1.1 | 13.1 | 8.7 |
| Example 1-4 | PP | PP | PP+PTF E (7:3) | 121 | 0.9 | 1.0 | 12.8 | 0.1 |
| Comparative Example 1-1 | PP | PPa | PP(100 %) | 92 | 0.9 | 1.0 | 11.5 | 7.0 |
| Comparative Example 1-2 | PP | PPa | PTFE(1 00%) | - | < 0.1 | < 0.1 | - | - |
| Comparative Example 1-3 | X | X | PP+PTF E (3: 7) | 290 | - | - | 3.3 | < 0.1 |

**[Table 2]**

| | Gas-permeable film | | | Gas d ischa rge r ate (ccmm /m²da y) | Adhesion (kgf/15mm) | | |
|---|---|---|---|---|---|---|---|
| | Firs t la yer | Sec ond la yer | Third l ayer | | First laye r-thi rd la yer | Secon d lay er-th ird l ayer | Film (first lay er) -p ouch adhes ion |
| Example 2-1 | PP | PP | PP+PTFE (3:7) | 281 | 0.9 | 0.9 | 12.3 |
| Example 2-2 | PP | PP | PP+PTFE (5:5) | 158 | 1.2 | 1.0 | 11.7 |
| Example 2-3 | PP | PP | PP+PTFE (7:3) | 113 | 0.9 | 1.0 | 13.9 |
| Comparative Example 2-1 | PP | PPa | PP(100% ) | 96 | 1.0 | 0.9 | 11.5 |
| Comparative Example 2-2 | PP | PPa | PTFE(10 0%) | - | < 0.1 | < 0.1 | - |
| Comparative Example 2-3 | - | - | PP+PTFE (3:7) | 290 | | | 3.2 |

Referring to Table 1 above, it can be confirmed that the gas-permeable film of each of Examples 1-1 to 1-4 according to an embodiment of the present disclosure is disposed on the electrode lead, and thus, is capable of maintaining an excellent level of adhesion between the films while being capable of maintaining excellent adhesion to the pouch exterior material, and has an outstanding gas discharge performance. However, in the case of Example 1-4, the adhesion to the electrode lead was measured to be low, and in this case, it can be confirmed that when the interface between the lead film and the electrode lead is open to form a gas discharge path, an internal pressure is slightly increased, and the lead film at an outer end does not maintain the adhesion to the electrode lead and is completely delaminated, resulting in causing a problem of a vent phenomenon. Accordingly, it can be confirmed that it is more preferable that a modified polyolefin-based polymer is applied as the second layer, which can be seen from the results of Examples 1-1 to 1-3.

Meanwhile, in the case of Comparative Example 1-2 in which only PTFE was applied as the third layer, it was difficult to form a gas-permeable film itself due to an adhesion problem, so that it was not possible to measure adhesion to the electrode lead and to the pouch exterior material, and accordingly, it was not possible to confirm gas discharge performance. In addition, Comparative Example 1-1 is a case in which only PP was used as the third layer without being mixed with PTFE, and in this case, it can be confirmed that the adhesion was similar to that of Examples, but the gas discharge performance was very poor compared to that of Examples. Furthermore, in the case of Comparative Example 1-3 in which PP and PTFE were mixed as a single layer to form a film, it is possible to form the film itself, but the film has very poor adhesion to the pouch exterior material and to the electrode lead, and thus, is completely delaminated and vent at the moment of opening, so that it can be confirmed the durability is very low.

The gas-permeable film formed in the hole portion of the pouch exterior material in Table 2 also showed results that were not significantly different from the results in Table 1.In the case of Examples, the adhesion between the films was excellent, and the gas discharge performance was also excellent compared to Comparative Examples, but it has been confirmed that Comparative Examples 2-1 to 2-3 have poor discharge performance or adhesion for the same reasons as in Comparative Examples 1-1 to 1-3.

Although the present disclosure has been described with reference to the preferred embodiments and the drawings, it is to be understood that the disclosure is not limited thereto, and it is to be understood by those skilled in the art that various changes and modification in form and details may be made therein without departing from the spirit and scope of the disclosure as defined by the following claims.

### [Description of the Reference Numerals or Symbols]

10: Gas-permeable film
11: First polymer layer
12: Second polymer layer
13: Third polymer layer
100: Electrode assembly
110: Lead film
120: Electrode lead
200: Pouch exterior material
210: Gas-permeable film
220a: Upper pouch
220b: Lower pouch
221: Inner layer portion
222: Outer layer portion
223: Deep layer portion
230: Terrace portion
300: Inner space
310: Gas collection portion
320: Gas discharge path

## Claims

1. A gas-permeable film comprising:
a first polymer layer;
a second polymer layer; and
a third polymer layer interposed between the first polymer layer and the second polymer layer,
wherein the third polymer layer includes polypropylene and polytetrafluoroethylene at a weight ratio of 9:1 to 1:9.

2. The gas-permeable film of claim 1, wherein the first polymer layer and the second polymer layer each independently comprise a polyolefin-based polymer.

3. The gas-permeable film of claim 1, wherein the second polymer layer comprises a modified polyolefin-based resin.

4. The gas-permeable film of claim 1, wherein the third polymer layer comprises polypropylene and polytetrafluoroethylene at a weight ratio of 8:2 to 2:8.

5. The gas-permeable film of claim 1, wherein the thickness of the first polymer layer is 40 to 200 µm.

6. The gas-permeable film of claim 1, wherein the thickness of the second polymer layer is 40 to 200 µm.

7. The gas-permeable film of claim 1, wherein the thickness of the third polymer layer is 40 to 600 µm.

8. A secondary battery comprising:
an electrode assembly;
a pouch exterior material for accommodating the electrode assembly;
an electrode lead electrically connected to the electrode assembly; and
the gas-permeable film of claim 1 adhered to at least one surface of the electrode lead.

9. The secondary battery of claim 8, wherein the second polymer layer o f the gas-permeable film comprises poly(propylene-co-acrylic acid).

10. A pouch exterior material for accommodating an electrode assembly,
wherein the pouch exterior material has a structure in which a metal layer and a polymer layer are stacked,
wherein the pouch exterior material has one or more holes, and
the one or more holes are sealed with the gas-permeable film of claim 1.

11. The pouch exterior material of claim 10, wherein the pouch exterior material has an outer layer portion and an inner layer portion, which are the polymer layer,
wherein a deep layer portion interposed between the outer layer portion and the inner layer portion is the metal layer.

12. The pouch exterior material of claim 10, wherein the outer layer portion comprises one or more selected from the group consisting of polyethyleneterephthalate, polybutyleneterephthalate, polyethylenenaphthalate, polybutylenenaphthalate, copolymerized polyester, polycarbonate, and nylon.

13. The pouch exterior material of claim 10, wherein the deep layer portion comprises one or more selected from the group consisting of aluminum, copper, nickel, iron, carbon, chromium, manganese, and an alloy including two or more thereof.

14. The pouch exterior material of claim 10, wherein the inner layer portion comprises one or more selected from the group consisting of polypropylene, acid-modified polypropylene, random polypropylene, and an ethylene propylene copolymer.

15. The pouch exterior material of claim 10, wherein the accommodated electrode assembly has an electrode lead electrically connected to the electrode assembly,
wherein:
the electrode lead is drawn to the outside of the pouch exterior material;
a gas collection portion is formed between a region in which the electrode lead is drawn to the outside of the pouch exterior material and the electrode assembly; and
the hole is formed in a pouch exterior material region corresponding to the gas collection portion.
